# EUROPÄISCHE PATENTSCHRIFT

(11) **EP 1 925 340 B1**
(45) Veröffentlichungstag und Bekanntmachung des Hinweises auf die Patenterteilung: **27.07.2011**
(21) Anmeldenummer: 07021857.3
(22) Anmeldetag: 10.11.2007
(51) Int. Cl.: A63B 22/02, A01K 15/02

(54) **Laufbandvorrichtung zur Laufbewegung von Lebewesen, insbesondere von Huftieren, hierbei insbesondere von Pferden**
Treadmill device for moving living beings, in particular hoofed animals, here in particular horses
Dispositif de tapis roulant pour le mouvement de marche d'êtres vivants, en particulier d'animaux à sabots, et en particulier de chevaux

(30) Priorität: 10.11.2006 DE 102006053349; 10.11.2006 DE 202006017300 U
(43) Veröffentlichungstag der Anmeldung: 28.05.2008
(73) Patentinhaber: MLS Lanny GmbH, 75323 Bad Wildbad (DE)
(72) Erfinder: Lanny, Michael, 75323 Bad Wildbach (DE)
(74) Vertreter: Leitner, Waldemar

(56) Entgegenhaltungen:
- EP-A- 1 604 709
- WO-A-92/11905
- US-A- 5 072 928
- US-A- 5 279 528
- US-A- 6 013 011

## Beschreibung

Die Erfindung betrifft eine Laufbandvorrichtung zur Laufbewegung von Lebewesen, insbesondere von Huftieren, hierbei insbesondere von Pferden, mit einem auf einem Tragelement laufenden Laufband und einer Lagerung für das Tragelement, durch welche dieses elastische beweglich in der Laufbandvorrichtung angeordnet ist, wobei die Lagerung mindestens zwei an entgegengesetzten Seiten des Tragelements angeordnete Lager aufweist, und wobei jedes der Lager ein erstes Lagerteil und ein zweites Lagerteil aufweist, die parallel geschaltet sind und das erste Lagerteil eine fest vorgegebene Steifigkeit und das zweite Lagerteil eine einstellbare Steifigkeit aufweist.

Eine derartige Laufbandvorrichtung ist aus der US-A-5,279,528 bekannt. Nachteilig daran ist, dass sie keine anpassbare Lagerung des Tragelements ermöglicht, da die beiden Lagerelemente eine vorgegebene Steifigkeit aufweisen.

Laufbandvorrichtungen werden sowohl für Menschen als auch für Tiere zu Trainings- und Untersuchungszwecken ihrer Laufbewegung eingesetzt. Sie weisen In der Regel ein auf einer Unterlage umlaufendes Band auf, das sich unter dem Benutzer durchbewegt, so dass dieser darauf eine Laufbewegung vollführen kann, ohne sich in nennenswerter Weise räumlich fortzubewegen. Durch diesen Stillstand des Benutzers der Laufbandvorrichtung ist eine gute Beobachtbarkeit durch einen Trainer oder Mediziner gegeben, und da weiterhin nunmehr keine komplette Laufbahn mit ihrem enormen Platzaufwand mehr notwenig ist, ist eine witterungsunabhängige Aufstellmöglichkeit in geschlossenen Räumen gegeben.

Eine derartige Laufbandvorrichtung für Pferde ist in der DE 202 15 987 beschrieben, die ein Trainingsgerät zum Inhalt hat, das ein auf Rollen gelagertes, mit regelbarer Geschwindigkeit motorisch angetriebenes Laufband aufweist.

Die DE 295 07 696 beschreibt ein Laufband für Haustiere, das in einem Wipp-Rahmen angeordnet und über eine mittige Drehachse innerhalb eines Basis-Rahmens mittels Servomotoren sowohl nach oben als auch nach unten neigbar ist, wodurch eine Steigung bzw. ein Gefälle entsteht.

Bei derartigen Laufbandvorrichtungen ist die das Laufband tragende Unterlage durch eine Lagerung mit der Laufbandvorrichtung verbunden, um im wesentlichen die durch das Gewicht des Benutzers bei dessen Laufbewegung hervorgerufenen Kräfte aufzunehmen.

Die US 6,872,168 B2 beschreibt eine Laufbandvorrichtung, die ein auf einem Tragelement laufendes Laufband aufweist. Das Tragelement weist an einer Seite eine Abstützung auf, welche auf einem die Vorrichtung tragenden Untergrund aufsetzt. Die gegenüberliegende Seite des Tragelements weist ein Gelenk auf, an dem ein erstes Ende eines Verbindungsarms angelenkt ist. Das andere Ende des Verbindungsarms ist an einem Rahmen der Vorrichtung angelenkt. Am Verbindungsarm ist des weiteren ein erstes Ende einer Dämpfungseinrichtung angelenkt, deren zweites Ende mit dem Rahmen der Vorrichtung verbunden ist. Hierdurch wird eine Dämpfung des Tragelements erreicht, welche adjustierbar einsteilbar ist.

Aus der US 6,554,749 B2 ist eine Laufbandvorrichtung bekannt, an deren vorderem Ende ein starres Abstützelement angeordnet ist, das an einem die Vorrichtung tragenden Untergrund aufsetzt. Am hinteren Ende des Tretelements ist eine Stoßdämpfungseinrichtung vorgesehen.

Die US 5,072,928 beschreibt eine Laufbandvorrichtung, die ein Laufband und ein Tragelement aufweist, wobei am vorderen Ende des Tragelements eine Stoßdämpfungseinrichtung vorgesehen ist.

Die vorgenannten Laufbandvorrichtungen besitzen den Nachteil, dass jeweils nur an einer Seite des Tragelements eine Stoßdämpfung vorgesehen ist, nicht aber eine elastische Lagerung des Tragelements. Eine Stoßdämpfung vermag zwar bei relativ leichtgewichtigen Benutzern wie Menschen ausreichend sein. Sie ist aber nicht in der Lage, den gewünschten Effekt bei schweren Benutzern wie z. B. Pferden oder anderen Huftieren zu erzielen. Insbesondere ist es durch die bei den bekannten Laufbandvorrichtung vorgesehenen Stoßdämpfeinrichtungen nicht möglich, eine individuelle Anpassung derselben an derartig schwere Benutzer zu ermöglichen.

Es ist daher Aufgabe der vorliegenden Erfindung, eine Laufbandvorrichtung der eingangs genannten Art derart weiterzubilden, dass in einfacher Art und Weise eine elastische und individuell anpassbare Lagerung des Tragelements ermöglicht wird.

Diese Aufgabe wird durch die vorliegende Erfindung dadurch gelöst, dass das zweite Lagerteil ein erstes Lagerelement vorgegebener Steifigkeit und ein zweites Lagerelement einstellbarer Steifigkeit aufweist.

Durch diese erfinderischen Maßnahme kann in vorteilhafter Art und Weise die Lagerung und somit das Laufband auf spezifische Anforderungen, insbesondere das Gewicht, des Benutzers abgestimmt werden und beispielsweise bei Benutzern mit höherem Gewicht die Steifigkeit der Lagerung erhöht werden. Durch die - vorzugsweise variabel - einstellbare Stetigkeit der Lagerung ist es zudem möglich, unterschiedlich nachgiebige Lauf-Untergründe zu simulieren, wobei eine Lagerung mit hoher Steifigkeit einen harten Lauf-Untergrund und eine Lagerung mit geringer Steifigkeit einen weichen Lauf-Untergrund nachbildet. Erfindungsgemäß ist vorgesehen, dass die Lagerung mindestens zwei an entgegengesetzten Seiten des angeordneten Tragelements angeordnete Lager aufweist. Durch diese Anordnung von mindestens zwei Lagern an entgegengesetzten Seiten des Tragelements wird eine verbesserte elastische Lagerung desselben erreicht. Des weiteren ist vorgesehen, dass bei jedem Lager der Lagerung ein erstes Lagerteil und ein zweites Lagerteil parallel geschaltet sind, wobei das erste Lagerteil eine fest vorgegebene Steifigkeit und das zweite Lagerteil eine einstellbare, vorzugsweise stufenlos variable Steifigkeit aufweist. Hierdurch ist es in vorteilhafter Art und Weise möglich, durch eine Veränderung der Steifigkeit des zweiten, parallel geschalteten Lagerteils die Gesamtsteifigkeit des Lagers zu verändern.

Von Vorteil ist, dass das zweite Lagerteil ein erstes Lagerelement hoher Steifigkeit aufweist, das mit einem zweiten Lagerelement einstellbarer, insbesondere stufenlos variabler Steifigkeit in Serie geschaltet ist, wobei vorzugsweise das erste Lagerteil als ein elastisches Element ausgebildet ist und das zu diesem in Serie geschaltete zweite Lagerelement als eine Federung, insbesondere als eine Luftfederung, ausgebildet ist. Bei der Verwendung einer Luftfederung ist es in vorteilhafter Weise möglich, durch die gezielte Wahl der Luftmenge und dadurch des Luftdrucks in der Luftfederung deren Längsausdehnung und Steifigkeit variabel einzustellen und somit den Anpressdruck des dazu in Serie geschalteten ersten Lagerelements gegen das Tragelement zu variierten. Durch Wahl eines geringen Luftdrucks der Luftfederung ist es damit möglich, die Steifigkeit des aus diesem Lagerelement und dem dazu in Serie geschalteten ersten Lagerelement gebildeten zweiten Lagerteils so zu reduzieren, dass lediglich das zu diesem parallel geschaltete erste Lagerteil und somit nur dessen vorzugsweise gering gewählte Steifigkeit wirksam ist.

Eine weitere vorteilhafte Weiterbildung der Erfindung sieht vor, dass die Federung eine Begrenzung für ihre Längsausdehnung in einer vertikalen Richtung aufweist. Hierdurch ist es in vorteilhafter Weise möglich, insbesondere durch Begrenzung der Längsausdehnung der Luftfederung in vertikaler Richtung ebenfalls eine Begrenzung der Vertikalbewegung des Tragelements zu erreichen.

Eine weitere vorteilhafte Weiterbildung der Erfindung sieht vor, dass das Tragelement eine Begrenzung der Beweglichkeit in seiner vertikalen Richtung aufweist. Hierdurch wird auf vorteilhafte Art und Weise verhindert, dass das Tragelement - beispielsweise, wenn der Benutzer dieses verlässt - in Folge der Entlastung eine unkontrollierte Vertikalbewegung ausführt.

Eine weitere vorteilhafte Weiterbildung der Erfindung sieht vor, dass die Vorrichtung mindestens einen Wegaufnehmer aufweist, der eine vertikale Position des Tragelements erfasst. Hierdurch kann beispielsweise in vorteilhafter Art und Weise die beim Betreten der Laufbandvorrichtung durch den Benutzer auftretende Einfederung des Tragelements gemessen und deren Lagerung daraufhin angepasst werden.

Eine weitere vorteilhafte Weiterbildung der Erfindung sieht vor, dass das Tragelement in Leichtbauweise ausgeführt ist. Hierdurch kann insbesondere bei leichten Benutzern wie Tieren der Einfluss deren Gewichts im Verhältnis zu dem des Tragelements erhöht werden und damit die Möglichkeiten der flexiblen Lagerung des Tragelements besser ausgenutzt werden.

Eine weitere vorteilhafte Weiterbildung der Erfindung sieht vor, dass das Tragelement, welches vorzugsweise in einem Gestell gelagert ist, neigbar in der Laufbandvorrichtung angeordnet ist. Durch diese Maßnahme ist es möglich, eine Bergauf- bzw. Bergablaufbewegung zu simulieren. Vorzugsweise ist hierbei ein erstes Rahmenlagerelement, in dem das Gestell drehbar gelagert ist, außerhalb einer Symmetrieachse auf einer einem zweiten Rahmenelement gegenüberliegenden Seite der Symmetrieachse angeordnet und das Gestell weiterhin über ein zweites Rahmenlagerelement gelagert, dessen Länge veränderlich ist, dadurch den Abstand eines Bodenlagerpunktes und eines Gestelllagerpunktes zueinander verändert und so die Neigung der Laufbandvorrichtung einstellt. Durch diese Art der Lagerung und insbesondere die außermittige Anordnung des ersten Rahmenlagerelements wird - im Gegensatz zu einer mittigen Anordnung - ein Kippen der Vorrichtung um die Drehachse weitgehend verhindert und eine stabile Lage der Laufbandvorrichtung erreicht.

Vorzugsweise ist hierbei das zweite Rahmenlagerelement an einem stirnseitigen Ende der Laufbandvorrichtung angeordnet. Hierdurch ergibt sich ein möglichst großer Abstand zwischen erstem und zweitem Rahmenlagerelement, wodurch ein günstiger langer Hebelarm und eine stabile Lagerung gegeben ist.

Eine weitere vorteilhafte Weiterbildung der Erfindung sieht vor, dass die Neigung des Tragelements bzw. des Gestells der Laufbandvorrichtung durch mindestens ein Spindelhubgetriebe erfolgt. Dies stellt einen Antrieb von hoher Steifigkeit sicher und verhindert dadurch nachteilige Kippbewegungen der Tragplatte bzw. des Gestells.

Eine weitere vorteilhafte Weiterbildung der Erfindung sieht vor, dass die Laufrichtung des Laufbandes umkehrbar ist. Hierdurch sind sich insbesondere bei außermittiger Anordnung des ersten Rahmenlagerelements ergebende Unterschiede der maximalen Neigung der Tragplatte bei aufwärts bzw. abwärts gerichteter Position ausgleichbar.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1:: eine Seitenansicht eines Ausführungsbeispiels einer Lagerung eines Gestells der Laufbandvorrichtung in aufwärts geneigter Position,
- Figur 2:: eine Seitenansicht des Ausführungsbeispiels der Figur 1 in waagerechter Position,
- Figur 3:: eine Seitenansicht des Ausführungsbeispiels der Figur 1 in abwärts geneigter Position.
- Figur 4:: das Ausführungsbeispiel der Laufbandvorrichtung in einem Querschnitt senkrecht zu einer Bewegungsrichtung eines Laufbandes,
- Figur 5:: eine vergrößerte Darstellung eines Ausführungsbeispiels eines Lagers der Laufbandvorrichtung der Figur 1,
- Figur 6:: eine vergrößerte Darstellung eines weiteren Ausführungsbeispiels eines Lagers einer Laufbandvorrichtung,

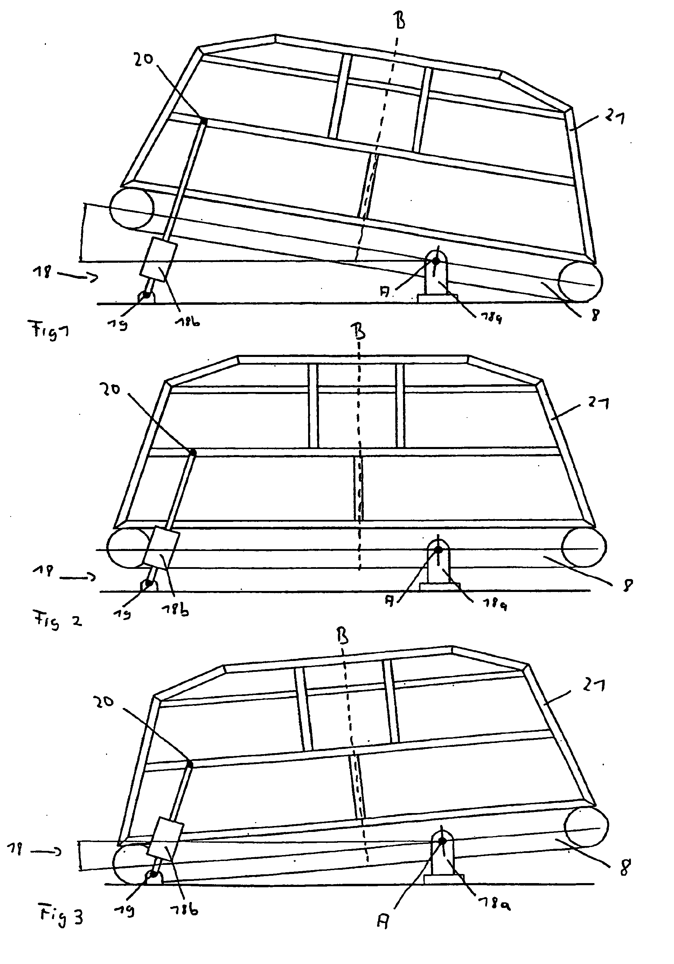

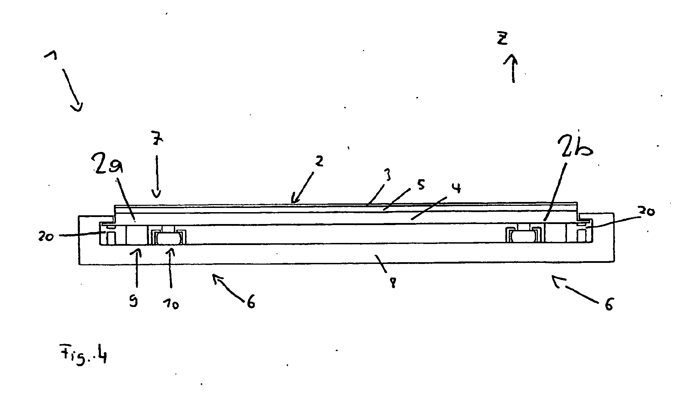

In den Figuren 1 bis 3 ist ein Ausführungsbeispiel einer Laufbandvorrichtung 1 zur Durchführung einer Laufbewegung von Lebewesen dargestellt. Diese weist - wie in den Figuren 4 bis 6 dargestellt - ein Tragelement 2 mit einem Laufband 3 und einer auf einer Trägerplatte 4 angebrachten Gleitplatte 5 auf, wobei sich das Laufband 3 in einer Richtung senkrecht zur Bildebene bewegt, so dass ein Benutzer durch Ausführen von Schritten auf dem sich unter ihm hinwegbewegenden Laufband 3 eine Laufbewegung ausführen kann, ohne sich in der Regel räumlich relativ zu seiner Umgebung nennenswert fortzubewegen. Das Laufband 3 ist hierbei als Endlosband ausgeführt, so dass über eine hier nicht dargestellte Bandrückführung eine ununterbrochene Umlaufbewegung möglich ist.

Das Tragelement 2 ist über eine elastische Lagerung 6, die in diesem Ausführungsbeispiel aus mehreren, vorzugsweise vier, Lagern 7 zusammengesetzt ist, von denen in Figur 4 zwei dargestellt sind, in einem Gestell 8 der Laufbandvorrichtung 1 gelagert. Die Lager 7 sind an entgegengesetzten Seiten 2a, 2b des Tragelements 2 und vorzugsweise an allen vier Eckbereichen derselben angeordnet. Die Lagerung 6 nimmt hierbei hauptsächlich die bei der Laufbewegung auftretenden Kräfte entgegen einer Richtung Z auf, die bei horizontaler Ausrichtung der Laufbandvorrichtung der Wirkungslinie der Schwerkraft entspricht. Eine Neigung des Gestells 8 zur Simulation einer Bergauf- oder Bergablaufbewegung ist jedoch ebenfalls vorgesehen.

Hierzu weist die Laufbandvorrichtung 1 eine Rahmenlagerung 18 auf, die sich aus einem ersten Rahmenlagerelement 18a, in dem das Gestell 8 drehbar um eine Achse A gelagert ist, und einem zweiten Rahmenlagerelement 18b, das in seiner Länge veränderbar ist, zusammensetzt. Über einen Bodenlagerpunkt 19 ist das zweite Rahmenlagerelement 18b mit dem Boden und über einen Gestelllagerpunkt 20 mit einem Geländer 21 des Gestells 8 verbunden. Das erste Rahmanlagerelement 18a liegt hierbei außerhalb einer Symmetrieachse B auf der dem zweiten Rahmenlagerelement 18b gegenüberliegenden Seite der Symmetrieachse B. Hierdurch ist es außermittig am Gestell 8 angeordnet, sodass eine stabilere Lageranordnung gegeben ist und ein Kippen des Gestells 8, wie dies bei einem mittig am Gestell 8 angeordneten ersten Rahmenlagerelement 18a der Fall wäre, vermieden wird. Die Neigung des Gestells 8 wird nun über das längenveränderliche zweite Rahmenlagerelement 18b eingestellt, durch das der Bodenlagerpunkt 19 und der Gestelllagerpunkt 20 einander angenähert bzw. von einander entfernt werden können. Auf diese Weise wird eine Simulation einer Bergauf- bzw. Bergablaufbewegung möglich. Das zweite Rahmenlagerelement 18b ist hierbei an einem stirnseitigen Ende der Laufbandvorrichtung 1 angeordnet, so dass sich ein möglichst großer Abstand vom ersten Rahmenlagerelement 18a und dadurch sowohl ein vorteilhafter langer Hebelarm als auch eine stabile Lagerung ergibt. Vorzugsweise erfolgt hierbei der Antrieb der Längenveränderung des zweiten Rahmenlagerelements 18b durch ein hier nicht dargestelltes Spindelhubgetriebe, das beispielsweise über einen Elektromotor antreibbar ist. Hierdurch ergibt sich eine möglichst hohe Steifigkeit des Antriebs, so dass ein unerwünschtes Kippen des Tragelementes 2 verhindert wird. Die Zahl der ersten und zweiten Rahmenlagerelemente 18a bzw. 18b ist hierbei selbstverständlich nicht auf jeweils eines beschränkt. Vorzugsweise weist die Laufbandvorrichtung 1 zwei jeweils die Achse A einschließende erste Rahmenlagerelemente 18a sowie zwei in dieser Darstellung hintereinander liegende zweite Rahmenlagerelemente 18b auf. Bei der Verwendung von zwei Rahmenlagerelementen 18b und insbesondere deren Antrieb durch Spindelhubgetriebe wird bevorzugt, dass beide Spindelhubgetriebe von einem einzigen Elektromotor antreibbar sind, wobei beispielsweise beide Spindelhubgetriebe durch eine Verbindungswelle verbunden werden.

Zur Erfassung der Neigung des Tragelements 2 weist die Laufbandvorrichtung 1 vorzugsweise eine Einrichtung wie beispielsweise einen hier nicht dargestellten Wegaufnehmer oder einen in der Nähe der Achse A angebrachten Winkelsensor auf.

Im Gegensatz zu bisherigen bekannten Laufbandvorrichtungen, bei denen die Steifigkeit der Lagerung unveränderlich war, ist es nun bei der Laufbandvorrichtung 1 möglich, die Steifigkeit der Lagerung 6 - vorzugsweise variabel - zu regulieren.

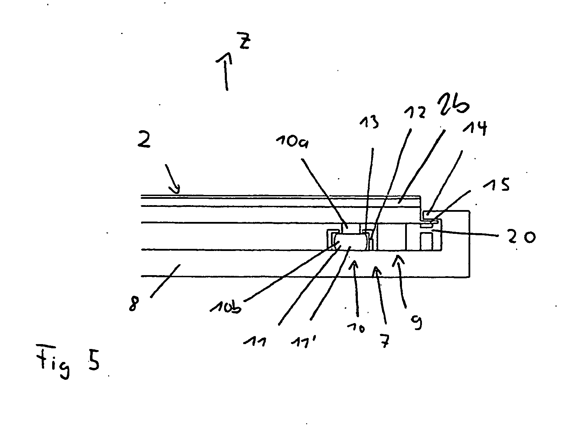

Bei dem vorliegenden Ausführungsbeispiel ist hierzu jedes Lager 7 der Lagerung 6 wie in Figur 5 dargestellt als Parallelschaltung eines elastisch ausgeführten ersten Lagerteils 9, beispielsweise eines Gummielements, und eines - bei dem hier beschriebenen Ausführungsbeispiel - aus einem ersten Lagerelement 10a und einem zweiten Lagerelement 10b zusammengesetzten zweiten Lagerteils 10 ausgebildet. Das zweite Lagerteil 10 stellt hierbei eine Serienschaltung des ersten Lagerelements 10a und des zweiten Lagerelements 10b dar.

Das zweite Lagerelement 10b ist hier als Luftfederung 11 ausgebildet, die durch einen Luftbalg 11' realisiert ist. Es ist aber auch möglich, anstelle der Luftfederung 11 eine andere pneumatische Federung oder auch eine hydraulische, mechanische oder elektromagnetische Federung einzusetzen.

Während das erste Lagerteil 9 und ebenso das erste Lagerelement 10a des zweiten Lagerteils 10 eine vorgegebene, vorzugsweise konstante Steifigkeit aufweisen, ist die Längsausdehnung der Luftfederung 11 und damit über den Anpressdruck des ersten Lagerelements 10a gegen das Tragelement 2 die Steifigkeit des zweiten Lagerteils 10 dadurch variierbar, dass die Luftmenge und dadurch der Luftdruck in der Luftfederung 11 regulierbar ist. Auf diese Weise stellt jedes der Lager 7 eine Parallelschaltung aus erstem Lagerteil 9 mit vorgegebener Steifigkeit und zweitem Lagerteil 10 mit regulierbarer Steifigkeit dar. Dabei weist das erste Lagerteil 9 vorzugsweise eine geringe Steifigkeit und das zweite Lagerteil 10 eine einstellbare Steifigkeit innerhalb eines Bereichs auf, dessen Obergrenze die Steifigkeit des ersten Lagerteils 9 überschreitet. Eine umgekehrte Ausbildung, das heißt, dass das erste Lagerteil 9 eine größere Steifigkeit aufweist als das zweite Lagerteil 10, ist aber ebenfalls möglich.

In einer entlasteten Ruhestellung der Laufbandvorrichtung 1 wird nun in der Luftfederung 11 zunächst ein geringer Luftdruck eingestellt, so dass durch die geringe Längsausdehnung der Luftfederung 11 der Anpressdruck des dazu in Serie geschalteten ersten Lagerelements 10a gegen das Tragelement 2 gering ist und dieses Tragelement 2 somit hauptsächlich auf dem eine geringe Steifigkeit aufweisenden ersten Lagerteil 9 ruht. Vorzugsweise weist hierbei jedes der Lager 7 der Lagerung 6 in diesem Zustand eine geringe Steifigkeit auf. Betritt nun ein Benutzer das Laufband 3, so wird infolge seines Gewichtes das Tragelement 2 entgegen der Z-Richtung ausgelenkt. Vorzugsweise wird über hier vier Wegaufnehmer 20, die in diesem Ausführungsbeispiel jeweils in einer Ecke des rechteckigen Tragelements 2 nahe jeweils eines der Lager 7 angeordnet sind, diese Auslenkung des Tragelements 2 erfasst und daraufhin durch Erhöhung des Luftdrucks in der Luftfederung 11 durch deren Längsausdehnung der Anpressdruck des ersten Lagerelements 10a des zweiten Lagerteils 10 gegen das Tragelement 2 soweit erhöht, bis sich durch die Kombinationswirkung der vorgegebenen Steifigkeit des ersten Lagerteils 9 und der regulierbar einstellbaren höheren Steifigkeit des zweiten Lagerteils 10 die gewünschte Gesamtsteifigkeit jedes der Lager 7 der Lagerung 6 ergibt.

Damit sich die Luftfederung 11 bei einer Erhöhung des sie beaufschlagenden Luftdrucks nicht unbeschränkt ausdehnt, ist vorzugsweise eine Begrenzung in Form einer Halterung 12 vorgesehen, deren Anschlagfläche 13 die Längsausdehnung der Luftfederung 11 in Z-Richtung begrenzt.

Nach Erreichen der maximalen Längsausdehnung ist dann durch eine weitere Erhöhung des Luftdrucks in der Luftfederung 11 und damit einer Erhöhung ihres Elastizitätsmoduls die Steifigkeit des zweiten Lagerteils 10 weiter steigerbar.

Die Lagerung 6 ist somit in vorteilhafter Art und Weise individuell auf den Benutzer der Laufbandvorrichtung 1 abstimmbar.

Um bei einem Verlassen der Laufbandvorrichtung 1 durch den Benutzer eine unkontrollierte Bewegung des Tragelements 2 in Z-Richtung zu verhindern, weist das Gestell 8 der Vorrichtung 1 einen Vorsprung 14 auf, gegen den ein Anschlag 15 des Tragelements 2 bei einer zu großen Bewegung in Z-Richtung anschlägt und somit diese Bewegung nach oben hin begrenzt.

Durch die vorzugsweise variabel wählbare Steifigkeit der Lagerung 6 des Tragelements 2 kann nun bei der Laufbandvorrichtung 1 realitätsnah ein unterschiedlicher Laufuntergrund simuliert werden. So bildet beispielsweise eine geringe Steifigkeit der Lagerung 6 einen nachgiebigen Untergrund und eine hohe Steifigkeit der Lagerung 6 einen harten Untergrund nach.

Weiterhin ist es nun möglich, jedem einzelnen der Lager 7 der Lagerung 6 eine unterschiedliche Steifigkeit zu verleihen. Hierdurch ist es beispielsweise möglich, einer rechten Seite der Laufbandvorrichtung 1, die verstärkt rechte Extremitäten der Benutzer trainiert, sowie einer linken Seite der Laufbandvorrichtung 1, die verstärkt linke Extremitäten der Benutzer trainiert, unterschiedliche Steifigkeiten zu verleihen und somit die jeweiligen Extremitäten unterschiedlich zu trainieren.

Insbesondere bei einem vierbeinigen Benutzer ist es weiterhin möglich, denjenigen Lagern 7, die sich an einer Vorderseite der Laufbandvorrichtung 1 befinden, eine andere Steifigkeit zu verleihen als denjenigen Lagern 7, die sich an einer Hinterseite der Laufbandvorrichtung befinden und somit vordere bzw. hintere Extremitäten des Benutzers unterschiedlich zu trainieren. Ein beispielhaftes Anwendungsgebiet hierfür ist das Training von Sportpferden, bei denen häufig ein unterschiedliches Training von Vorder- bzw. Rückpartie bzw. in einer Phase der Rekonvaleszenz nach einer Verletzung ein gezieltes Training einer verletzten Extremität notwendig ist.

Insbesondere wenn eine Benutzung der Laufbandvorrichtung 1 durch hauptsächlich leichte Benutzer wie beispielsweise Hunde vorgesehen ist, wird eine Ausführung des Tragelements 2 in einer dem Fachmann bekannten Leichtbauweise zum Beispiel als Wabenkonstruktion bevorzugt, da bei einem zu schweren Tragelement 2 das Gewicht des Benutzers an Einfluss verliert und somit die Möglichkeiten der Laufbandvorrichtung 1 mit flexibler Lagerung 6 nicht optimal ausgeschöpft werden können.

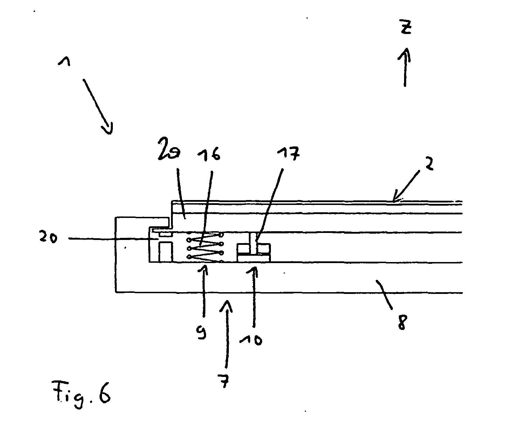

Im Gegensatz zu der in diesem Ausführungsbeispiel geschilderten Ausbildung der Lager 7 sind andere Ausgestaltungen ebenfalls möglich. So kann das Lager 7 beispielsweise auch wie in Figur 6 dargestellt mit einer Feder 16 als erstes Lagerteil 9 und parallelgeschaltetem - vorzugsweise fernbetätigt - regelbarem Hydraulikdämpfer 17 als zweites Lagerteil 10 ausgebildet sein, wobei der Hydraulikdämpfer 17 durch seine einstellbare Dämpfung die variable Steifigkeit des Lagers 7 sicherstellt.

Auch können nicht nur das erste Lagerteil 9, sondern sowohl das erste Lagerteil 9 als auch das zweite Lagerteil 10 des Lagers 7 eine variable Steifigkeit aufweisen oder die einzelnen Lager 7 der Lagerung 6 unterschiedlich ausgebildet sein.

## Patentansprüche

1. Laufbandvorrichtung zur Laufbewegung von Lebewesen, insbesondere von Huftieren, hierbei insbesondere von Pferden, mit einem auf einem Tragelement (2) laufenden Laufband (3) und einer Lagerung (6) für das Tragelement (2), durch welche dieses (2) elastische beweglich in der Laufbandvorrichtung (1) angeordnet ist, wobei die Lagerung (6) mindestens zwei an entgegengesetzten Seiten (2a, 2b) des Tragelements angeordnete Lager (7) aufweist, und wobei jedes der Lager (7) ein erstes Lagerteil (9) und ein zweites Lagerteil (10) aufweist, die parallel geschaltet sind und das erste Lagerteil (9) eine fest vorgegebene Steifigkeit und das zweite Lagerteil (10) eine einstellbare Steifigkeit aufweist, **dadurch gekennzeichnet, dass** das zweite Lagerteil (10) ein erstes Lagerelement (10a) vorgegebener Steifigkeit und ein zweites Lagerelement (10b) einstellbarer Steifigkeit aufweist.

2. Laufbandvorrichtung nach Anspruch 1, **dadurch gekennzeichnet, dass** das erste und das zweite Lagerelement (10a, 10b) in Serie geschaltet sind.

3. Laufbandvorrichtung nach einem der Ansprüche 1 oder 2, **dadurch gekennzeichnet, dass** das erste Lagerteil (9) und/oder das erste Lagerelement (10a) des zweiten Lagerteiles (10) elastisch ausgebildet sind.

4. Laufbandvorrichtung nach Anspruch 3, **dadurch gekennzeichnet, dass** das erste Lagerteil (9) und/oder das erste Lagerelement (10a) des zweiten Lagerteils (10) ein Gummielement aufweist.

5. Laufbandvorrichtung nach einem der Ansprüche 1 bis 4, **dadurch gekennzeichnet, dass** das zweite Lagerelement (10b) des zweiten Lagerteils (10) als Luftfederung (11), als pneumatische, hydraulische, mechanische oder elektromagnetische Federung ausgebildet ist.

6. Laufbandvorrichtung nach Anspruch 8, **dadurch gekennzeichnet, dass** die Federung eine Begrenzung für ihre Längsausdehnung in einer vertikalen Richtung (Z) aufweist, welche als Anschlagfläche (13) einer Halterung (12) ausgebindet ist

7. Laufbandvorrichtung nach einem der Ansprüche 1 bis 6, **dadurch gekennzeichnet, dass** mindestens ein Lager (7) jeweils an einem Eckbereich des Tragelements (2) angeordnet ist

8. Laufbandvorrichtung nach einem der vorangehenden Ansprüche, **dadurch gekennzeichnet, dass** die Laufbandvorrichtung (9) mindestens einen Wegaufnehmer (20) aufweist.

9. Laufbandvorrictung nach einem der vorangehenden Ansprüche, **dadurch gekennzeichnet, dass** das Tragelement (2) ein Begrenzung der Beweglichkeit In einer vertikalen Richtung (Z) aufweist, der durch einen Vorsprung (14) eines Gestells (8) der Laufbandvorrichtung (1) und einen gegen diesen beweglichen Anschlag (15) des Tragelements (2) ausgebildet ist.

10. Laufbandvorrichtung nach einem der vorangehenden Ansprüche, **dadurch gekennzeichnet dass** das erste Lagerteil (9) eine Feder (16) aufweist und/oder dass das zweite Lagerteil (10) einen regelbaren Hydraulikdämpfer (17) aufweist.

11. Laufbandvorrichtung nach einem der vorangehenden Ansprüche, **dadurch gekennzeichnet, dass** das Tragelement (2) neigbar in der Laufbandvorrichtung (1) angeordnet ist.

12. Laufbandvorrichtung nach Anspruch 11, **dadurch gekennzeichnet, dass** das Tragelement (2) in dem neigbar In der Laufbandvorrichtung (1) angeordneten Gestell (8) gelagert Ist

13. Laufbandvorrichtung nach Anspruch 11 oder 12, **dadurch gekennzeichnet, dass** die Laufbandvorrichtung (9) eine Rahmenlagerung (18) mit einem ersten Ruhmenlagerelement (18a), in dem das Tragelement (2) und/oder das Gestell (8) drehbar um eine Achse (A) quer zu einer Laufrichtung gelagert ist aufweist, wobei die Laufbandvorrichtung (1) vorzugsweise ein zweites Rahmenlagerelement (185) aufweist, dessen Länge einstellbar ist.

14. Laufbandvorrichtung nach Anspruch 13, **dadurch gekennzeichnet, dass** der Abstand eines Bodenlagerpunktes (19) und eines Gestelllagerpunktes (20) des zweiten Rahrmenlagerelements (18b) und dadurch die Neigung des Tragelements (2) veränderlich ist.

15. Laufbandvorrichtung nach einem der Ansprüche 13 oder 14, **dadurch gekennzeichnet, dass** das erste Rahmenlagerelement (18a) außerhalb einer Symmetrieachse (B) auf einer dem zweiten Rahmenlagerelement (18b) gegenüberllegenden Seite der Symmetrieachse (B) angeordnet ist.

16. Lautbandvorrichtung nach einem der Ansprüche 13 bis 15, **dadurch gekennzeichnet, dass** das zweite Rahmenlagerelement (18b) an einem stirnzeitigen Ende der Laufbandvorrichtung (1) angeordnet ist.

17. Laufbandvorrichtung nach einem der Ansprüche 11 bis 16, **dadurch gekennzeichnet, dass** eine Erfassung der Neigung des Tragelements (2) und/oder des Gestells (8) durch mindestens einen Wegaufnehmer erfolgt und/oder durch mindestens einen Winkelsensor erfolgt,

## Claims

1. Treadmill device for moving living beings, in particular hoofed animals, here in particular horses, having a treadmill (3) running on a support element (2) and a mounting (6) for the support element (2), by which said support element (2) is arranged in the treadmill device (1) elastically movable, the mounting (6) having at least two bearings (7) arranged at opposite sides (2a, 2b) of the support element (2), and each bearing (7) has got a first bearing part (9) and a second bearing part (10), which are arranged in parallel, the first bearing part (9) having a fixed preset stiffness and the second bearing part (10) has got an adjustable stiffness, **characterized in that** the second bearing part (10) has got a first bearing element (10a) with a predetermined stiffness and a second bearing element (10b) with an adjustable stiffness.

2. Treadmill device according to claim 1, **characterized in that** the first and the second bearing element (10a, 10b) are arranged in series.

3. Treadmill device according to one of the claims 1 or 2, **characterized in that** the first bearing part (9) and/or the first bearing element (10a) of the second bearing part (10) are provided elastically.

4. Treadmill device according to claim 3, **characterized in that** the first bearing part (9) and/or the first bearing element (10a) of the second bearing part (10) has got a rubber element.

5. Treadmill device according to one of the claims 1 to 4, **characterized in that** the second bearing element (10b) of the second bearing part (10) is formed as an air suspension (11), as a pneumatic, hydraulic, mechanic or electromagnetic suspension.

6. Treadmill device according to claim 5, **characterized in that** the suspension has got a limiter for its longitudinal extension in a vertical direction (2), which is formed as a stop face (13) of a mount (12),

7. Treadmill device according to one of the claims 1 to 6, **characterized in that** at least one bearing (7) is arranged in a corner area of the support element (2).

8. Treadmill device according to one of the previous claims, **characterized in that** the treadmill device (1) has got at least one displacement transducer (20).

9. Treadmill device according to one of the previous claims, **characterized in that** the first support element (2) has got a limiter for its movability in a vertical direction (Z), which is formed as a protrusion (14) of a base frame (6) of the treadmill device (1) and a stop (15) of the support element (2) being movable against this protrusion (14).

10. Treadmill device according to one of the previous claims, **characterized in that** the first bearing part (9) has got a spring (16) and/or that the second bearing part (10) has got an adjustable hydraulic damper (17).

11. Treadmill device according to one of the previous claims, **characterized in that** the support element (2) is arranged inclinable in the treadmill device (1).

12. Treadmill device according to claim 11, **characterized in that** the support element (2) is arranged in the base frame (8) being provided inclinable in the treadmill device (1).

13. Treadmill device according to claim 11 or 12, **characterized in that** the treadmill device (1) has got a frame support (18) with a first frame support element (18a), in which the support element (2) and/or the base frame (8) are arranged tiltablely around an axis (A) and transversely to a moving direction, and wherein the treadmill device (1) is preferably provided with a second frame support element (18b), the length of which is adjustable.

14. Treadmill device according to claim 13, **characterized in that** the distance between a surface mounting point (19) and a frame mounting point (20) of the second frame support element (18b) and hence the inclination of the support element (2) is adjustable.

15. Treadmill device according to one of the claims 13 or 14, **characterized in that** the first frame support element (18a) is arranged outside of a symmetry axis (B) on an opposite side to the second frame support element (18b).

16. Treadmill device according to one of the claims 13 to 15, **characterized in that** the second frame support element (18b) is arranged on a front side end of the treadmill device (1).

17. Treadmill device according to one of the claims 11 to 16, **characterized in that** the measurement of the inclination of the support element (2) and/or the base frame (8) is performed by means of a displacement transducer and/or by means of at least one angle sensor.

## Revendications

1. Dispositif à tapis roulant pour le mouvement de marche d'êtres vivants, en particulier des ongulés, en l'occurrence notamment des chevaux, comportant un tablier roulant (3), qui se déplace sur un élément de support (2), et un système de montage (6) pour l'élément de support (2), par lequel ce dernier (2) est disposé de manière élastiquement mobile dans le dispositif à tapis roulant (1), ledit système de montage (6) comportant au moins deux paliers (7), disposés sur des côtés (2a, 2b) opposés de l'élément de support, et chacun des paliers (7) comportant une première partie (9) et une deuxième partie (10), qui sont montées parallèlement, et la première partie de palier (9) possède une rigidité définie de manière fixe, et la deuxième partie de palier (10) possède une rigidité réglable, **caractérisé en ce que** la deuxième partie de palier (10) comporte un premier élément de palier (10a) avec une rigidité prédéfinie et un deuxième élément de palier (10b) avec une rigidité réglable.

2. Dispositif à tapis roulant selon la revendication 1, **caractérisé en ce que** le premier et le deuxième élément de palier (10a, 10b) sont montés en série.

3. Dispositif à tapis roulant selon la revendication 1 ou 2, **caractérisé en ce que** la première partie de palier (9) et/ou le premier élément de palier (10a) de la deuxième partie de palier (10) sont réalisés sous forme élastique.

4. Dispositif à tapis roulant selon la revendication 3, **caractérisé en ce que** la première partie de palier (9) et/ou le premier élément de palier (10a) de la deuxième partie de palier (10) comportent un élément en caoutchouc.

5. Dispositif à tapis roulant selon l'une quelconque des revendications 1 à 4, **caractérisé en ce que** le deuxième élément de palier (10b) de la deuxième partie de palier (10) est réalisé sous la forme d'une suspension à air (11), sous la forme d'une suspension pneumatique, hydraulique, mécanique ou électromagnétique.

6. Dispositif à tapis roulant selon la revendication 5, **caractérisé en ce que** la suspension comporte une limite pour son extension en longueur dans une direction verticale (Z), laquelle est réalisée sous la forme d'une surface de butée (13) d'une fixation (12).

7. Dispositif à tapis roulant selon l'une quelconque des revendications 1 à 6, **caractérisé en ce qu'**au moins palier (7) est agencé respectivement dans une zone d'angle de l'élément de support (2).

8. Dispositif à tapis roulant selon l'une quelconque des revendications précédentes, **caractérisé en ce que** le dispositif à tapis roulant (1) comporte au moins un capteur de déplacement (20).

9. Dispositif à tapis roulant selon l'une quelconque des revendications précédentes, **caractérisé en ce que** l'élément de support (2) comporte une limite de mobilité dans une direction verticale (Z), laquelle est réalisée par une saillie (14) d'un bâti (8) du dispositif à tapis roulant (1) et une butée (15), mobile contre ladite saillie, de l'élément de support (2).

10. Dispositif à tapis roulant selon l'une quelconque des revendications précédentes, **caractérisé en ce que** la première partie de palier (9) comporte un ressort (16) et/ou en ce que la deuxième partie de palier (10) comporte un amortisseur hydraulique (17) réglable.

11. Dispositif à tapis roulant selon l'une quelconque des revendications précédentes, **caractérisé en ce que** l'élément de support (2) est disposé de manière inclinable dans le dispositif à tapis roulant (1).

12. Dispositif à tapis roulant selon la revendication 11, **caractérisé en ce que** l'élément de support (2) est monté dans le bâti (8), disposé de manière inclinable dans le dispositif à tapis roulant (1).

13. Dispositif à tapis roulant selon la revendication 11 ou 12, **caractérisé en ce que** le dispositif à tapis roulant (1) comporte un système de montage du cadre (18) avec un premier élément d'appui (18a), dans lequel l'élément de support (2) et/ou le bâti (8) sont montés rotatifs autour d'un axe (A) transversal à une direction de déplacement, le dispositif à tapis roulant (1) comportant de préférence un deuxième élément d'appui (18b) pour le cadre, dont la longueur est réglable.

14. Dispositif à tapis roulant selon la revendication 13, **caractérisé en ce que** la distance entre un point d'appui au sol (19) et un point d'appui sur le cadre (20) du deuxième élément d'appui (18b) et, de ce fait, l'inclinaison de l'élément de support (2), sont modifiables.

15. Dispositif à tapis roulant selon la revendication 13 ou 14, **caractérisé en ce que** le premier élément d'appui (18a) est disposé en dehors d'un axe de symétrie (B) sur un côté de l'axe de symétrie (B), opposé au deuxième élément d'appui (18b).

16. Dispositif à tapis roulant selon l'une quelconque des revendications 13 à 15, **caractérisé en ce que** le deuxième élément d'appui (18b) est disposé sur une extrémité frontale du dispositif à tapis roulant (1).

17. Dispositif à tapis roulant selon l'une quelconque des revendications 11 à 16, **caractérisé en ce que** l'inclinaison de l'élément de support (2) et/ou du bâti (8) est détectée par au moins un capteur de déplacement et/ou par au moins un capteur d'angle.
